# FASCICULE DE BREVET EUROPEEN

(11) **EP 1 171 718 B1**
(45) Date de publication et mention de la délivrance du brevet: **02.10.2002**
(21) Numéro de dépôt: 00917142.2
(22) Date de dépôt: 06.04.2000
(51) Int. Cl.: F16C 19/06

(54) **PALIER A ROULEMENT RIGIDE A BILLES**
STARRES KUGELLAGER
RIGID ANTI-FRICTION BALL-BEARING

(30) Priorité: 16.04.1999 FR 9904830
(43) Date de publication de la demande: 16.01.2002
(73) Titulaire: SKF FRANCE, 78180 Montigny-le-Bretonneux (FR)
(72) Inventeur: GORENNE, Michel, F-37000 Tours (FR); GIRARDIN, Carole, F-37300 Joue-les-Tours (FR); FIERLING, Yannick, F-57410 Petit-Rederching (FR)
(74) Mandataire: Casalonga, Axel
(86) Numéro de dépôt international: FR0000872
(87) Numéro de publication internationale: WO00063569

(56) Documents cités:
- EP-A- 0 528 193
- DE-B- 1 169 210
- US-A- 3 292 980

## Description

L'invention concerne le domaine des paliers à roulements dits "rigides" à une rangée de billes.

De tels roulements comportent une bague extérieure pourvue d'un chemin de roulement toroïdal sur son alésage, une bague intérieure pourvue d'un chemin de roulement toroïdal sur sa surface externe, une rangée de billes disposées entre les deux chemins de roulement, au contact desdits chemins, le profil des chemins de roulement étant symétrique par rapport à un plan passant par le centre des billes, une cage se présentant sous la forme d'un élément annulaire muni d'un certain nombre d'alvéoles destinées à recevoir les billes et à les espacer convenablement dans le sens circonférentiel les unes par rapport aux autres pour éviter tout balourd lors de la rotation du roulement, et éventuellement des organes d'étanchéité sous la forme de joints ou de flasques disposés d'un ou des deux côtés du roulement afin de prévenir toute entrée d'éléments polluants en provenance de l'extérieur et d'empêcher toute fuite de lubrifiant vers l'extérieur du roulement.

De tels roulements sont connus et utilisés dans de multiples applications.

En vue de faciliter l'approvisionnement et l'interchangeabilité de ces roulements d'un fabricant à l'autre, les cotes relatives aux paramètres définissant l'encombrement et le montage de ces roulements ont été standardisées pour donner des séries de roulements dites "ISO".

Ces séries font appel à des désignations de base utilisant 4 chiffres (séries 6000, 6200, 6300) communes à tous les fabricants de roulements, à chaque désignation de base correspondant des cotes nominales d'encombrement (D = Diamètre extérieur, d = alésage et B = largeur) identiques chez tous les constructeurs.

L'utilisateur peut ainsi disposer de gammes standards de roulements, ce qui facilite son choix et assure l'interchangeabilité des roulements.

La durée de vie fonctionnelle d'un roulement n'est pas uniquement liée à la matière de base du roulement mais dépend également du lubrifiant utilisé ainsi que des autres éléments constituant le roulement tels que la cage ou les organes d'étanchéité.

Si les roulements conventionnels de la gamme ISO donnent toute satisfaction dans la plupart des applications, on a remarqué des défaillances par défaut de lubrification ou trop faible durée de vie de graisse dans certains cas.

Il s'agit notamment d'applications relatives au domaine des moteurs électriques, dans lesquelles le roulement est relativement peu chargé par rapport à sa capacité mais tourne à haute vitesse et à des températures relativement élevées.

Dans ce type d'application, c'est plus souvent la dégradation qualitative ou quantitative de la graisse, plus que la capacité de charge du roulement, qui conditionne la durée de vie du roulement. On peut essayer de prévenir les défaillances en utilisant par exemple des roulements dits "ouverts" (sans flasques ni joints) lubrifiés à la graisse et pour lesquels on procède périodiquement à une relubrification, ce qui coûte cher.

Un des objets de l'invention est de proposer une nouvelle gamme de roulements mieux adaptés à ces applications, présentant des dimensions d'encombrement identiques à celles des roulements conventionnels ISO, avec des caractéristiques internes de construction permettant de garantir une durée de service élevée grâce à une excellente lubrification à la graisse maintenue par des étanchéités efficaces.

Le dispositif de palier à roulement, selon l'invention, est du type comprenant une bague extérieure pourvue d'une surface extérieure et d'un alésage sur lequel est formé un chemin de roulement intérieur toroïdal, une bague intérieure pourvue d'un alésage et d'une surface extérieure cylindrique sur laquelle est formée un chemin de roulement extérieur toroïdal, une rangée de billes disposée entre les deux chemins de roulement, et une cage apte à maintenir un espacement circonférentiel régulier entre les billes. Le rapport entre l'épaisseur radiale de la bague extérieure prise entre le fond du chemin de roulement intérieur et la surface extérieure de la bague extérieure, et le diamètre des billes est compris entre 0,4 et 0,7. Le rapport entre l'épaisseur radiale de la bague extérieure prise entre le fond du chemin de roulement intérieur et la surface extérieure de la bague extérieure, et l'épaisseur radiale de la bague intérieure prise entre le fond du chemin de roulement extérieur et l'alésage de la bague intérieure est compris entre 1,1 et 1,6.

En d'autres termes, par rapport aux roulements conventionnels ISO, le diamètre des billes est réduit, l'épaisseur radiale de la bague extérieure est accrue au niveau du fond du chemin de roulement et l'épaisseur radiale de la bague intérieure au niveau du fond du chemin de roulement est sensiblement conservée.

Avantageusement, le rapport entre l'épaisseur radiale de la bague extérieure prise entre le fond du chemin de roulement intérieur et la surface extérieure de la bague extérieure, et le diamètre extérieur du roulement est compris entre 0,045 et 0,08.

Avantageusement, le rapport entre la largeur des bagues et le diamètre des billes est compris entre 1,3 et 2,2.

Avantageusement, le rapport entre la largeur des bagues et l'épaisseur radiale de la bague extérieure prise entre le fond du chemin de roulement intérieur et la surface extérieure de la bague extérieure est compris entre 2,5 et 4,2.

De préférence, les valeurs de diamètre extérieur du roulement, de diamètre intérieur du roulement, et de largeur du roulement sont identiques à celles d'un roulement rigide à une rangée de billes conventionnel de la gamme normalisée ISO.

Dans un mode de réalisation de l'invention, le rapport entre l'épaisseur radiale de la bague extérieure prise entre le fond du chemin de roulement intérieur et la surface extérieure de la bague extérieure, et le diamètre des billes est compris entre 0,5 et 0,6, que le rapport entre l'épaisseur radiale de la bague extérieure prise entre le fond du chemin de roulement intérieur et la surface extérieure de la bague extérieure, et l'épaisseur radiale de la bague intérieure prise entre le fond du chemin de roulement extérieur et l'alésage de la bague intérieure est compris entre 1,1 et 1,5, que le rapport entre l'épaisseur radiale de la bague extérieure prise entre le fond du chemin de roulement intérieur et la surface extérieure de la bague extérieure, et le diamètre extérieur du roulement est compris entre 0,045 et 0,06, que le rapport entre la largeur des bagues et le diamètre des billes est compris entre 1,7 et 2,2, et que le rapport entre la largeur des bagues et l'épaisseur radiale de la bague extérieure prise entre le fond du chemin de roulement intérieur et la surface extérieure de la bague extérieure est compris entre 3 et 4,2, les valeurs de diamètre extérieur du roulement, d'alésage du roulement et de largeur du roulement étant identiques à celles d'un roulement rigide à une rangée de billes conventionnel de la gamme normalisée ISO de la série 6000.

Dans un autre mode de réalisation de l'invention, le rapport entre l'épaisseur radiale de la bague extérieure prise entre le fond du chemin de roulement intérieur et la surface extérieure de la bague extérieure, et le diamètre des billes est compris entre 0,4 et 0,7, que le rapport entre l'épaisseur radiale de la bague extérieure prise entre le fond du chemin de roulement intérieur et la surface extérieure de la bague extérieure, et l'épaisseur radiale de la bague intérieure prise entre le fond du chemin de roulement extérieur et l'alésage de la bague intérieure est compris entre 1,2 et 1,6, que le rapport entre l'épaisseur radiale de la bague extérieure prise entre le fond du chemin de roulement intérieur et la surface extérieure de la bague extérieure, et le diamètre extérieur du roulement est compris entre 0,055 et 0,075, que le rapport entre la largeur des bagues et le diamètre des billes est compris entre 1,5 et 1,9, et que le rapport entre la largeur des bagues et l'épaisseur radiale de la bague extérieure prise entre le fond du chemin de roulement intérieur et la surface extérieure de la bague extérieure est compris entre 2,5 et 4, les valeurs de diamètre extérieur du roulement, d'alésage du roulement et de largeur du roulement étant identiques à celles d'un roulement rigide à une rangée de billes conventionnel de la gamme normalisée ISO de la série 6200.

Dans un autre mode de réalisation de l'invention, le rapport entre l'épaisseur radiale de la bague extérieure prise entre le fond du chemin de roulement intérieur et la surface extérieure de la bague extérieure, et le diamètre des billes est compris entre 0,4 et 0,55, que le rapport entre l'épaisseur radiale de la bague extérieure prise entre le fond du chemin de roulement intérieur et la surface extérieure de la bague extérieure, et l'épaisseur radiale de la bague intérieure prise entre le fond du chemin de roulement extérieur et l'alésage de la bague intérieure est compris entre 1,3 et 1,5, que le rapport entre l'épaisseur radiale de la bague extérieure prise entre le fond du chemin de roulement intérieur et la surface extérieure de la bague extérieure, et le diamètre extérieur du roulement est compris entre 0,065 et 0,08, que le rapport entre la largeur des bagues et le diamètre des billes est compris entre 1,3 et 1,8, et que le rapport entre la largeur des bagues et l'épaisseur radiale de la bague extérieure prise entre le fond du chemin de roulement intérieur et la surface extérieure de la bague extérieure est compris entre 3 et 3,6, les valeurs de diamètre extérieur du roulement, d'alésage du roulement et de largeur du roulement étant identiques à celles d'un roulement rigide à une rangée de billes conventionnel de la gamme normalisée ISO de la série 6300.

Grâce à l'invention, dans certaines applications pour lesquelles on utilisait des roulements ouverts lubrifiés par circulation d'huile, on pourra utiliser des roulements munis de joints d'étanchéité et graissés à vie.

Du fait de la réduction du diamètre des billes, le volume non balayé par les billes lors de la rotation du roulement est augmenté et on dispose de plus d'espace dans le sens axial pour implanter des éléments d'étanchéité tels que joints ou flasques qui de ce fait seront plus performants tant sur le plan de l'étanchéité statique ou dynamique que sur le plan de l'ancrage sur l'une des deux bagues. Les réserves latérales de graisse sont augmentées.

On peut utiliser une cage en matière synthétique avec un talon plus épais, ce qui permet des vitesses plus élevées.

On peut utiliser une cage en matière synthétique là où auparavant il fallait utiliser une cage en tôle avec des avantages importants de réduction du coût, de réduction du bruit de fonctionnement, de réduction du couple de frottement (moins d'énergie consommée, moins de génération de chaleur), et d'augmentation de la durée de vie de la graisse.

On sait en effet que l'utilisation d'une cage en matière plastique prolonge considérablement, de l'ordre d'un facteur de 2 à 3, la durée de vie de la graisse par rapport à une cage en acier selon les conditions de charge et l'application.

Les zones de contact entre les billes et les chemins de roulement sont réduites, d'où une réduction des effets de barattage/laminage de la graisse, ce qui prolonge également sa durée de vie, diminue le couple de rotation et donc l'échauffement interne du roulement et sa consommation d'énergie.

La masse des parties tournantes est réduite du fait de la diminution du diamètre des billes, d'où une réduction des inerties, des effets gyroscopiques et des forces centrifuges.

Dans les applications de moteurs électriques, la bague extérieure est fixe et généralement montée dans un logement en alliage léger, tandis que la bague intérieure est tournante et montée serrée sur un arbre tournant.

Dans le cadre de cette invention, on renforce encore les avantages précités en conférant à la bague extérieure une plus grande épaisseur au niveau du fond du chemin de roulement que pour une bague extérieure d'un roulement conventionnel de la gamme ISO. On diminue le diamètre primitif Dm du roulement pris au niveau du centre des billes et donc la vitesse périphérique des billes au niveau de ce diamètre moyen, augmentant ainsi les possibilités d'élever la vitesse de rotation de la bague tournante par rapport à un roulement conventionnel tout en diminuant 1a température de fonctionnement.

On amortit la transmission des bruits et des vibrations du roulement vers le logement de la bague extérieure. On augmente la possibilité de serrage de la bague extérieure dans son logement avec des effets moindres sur le jeu interne du roulement. On diminue les effets néfastes d'un logement possédant des caractéristiques géométriques médiocres sur la bague extérieure du roulement.

Enfin, les valeurs d'encombrement extérieur, diamètre extérieur D, diamètre intérieur d et largeur B d'un roulement suivant l'invention sont identiques à celles d'une référence correspondante de roulement rigide à une rangée de billes conventionnel de la gamme ISO.

Les roulements suivant l'invention sont donc parfaitement interchangeables avec les roulements conventionnels de la gamme ISO et procurent un grand nombre d'avantages.

La présente invention sera mieux comprise et d'autres avantages apparaîtront à la lecture de la description détaillée d'un mode de réalisation pris à titre d'exemple nullement limitatif et illustré par les dessins annexés, sur lesquels :

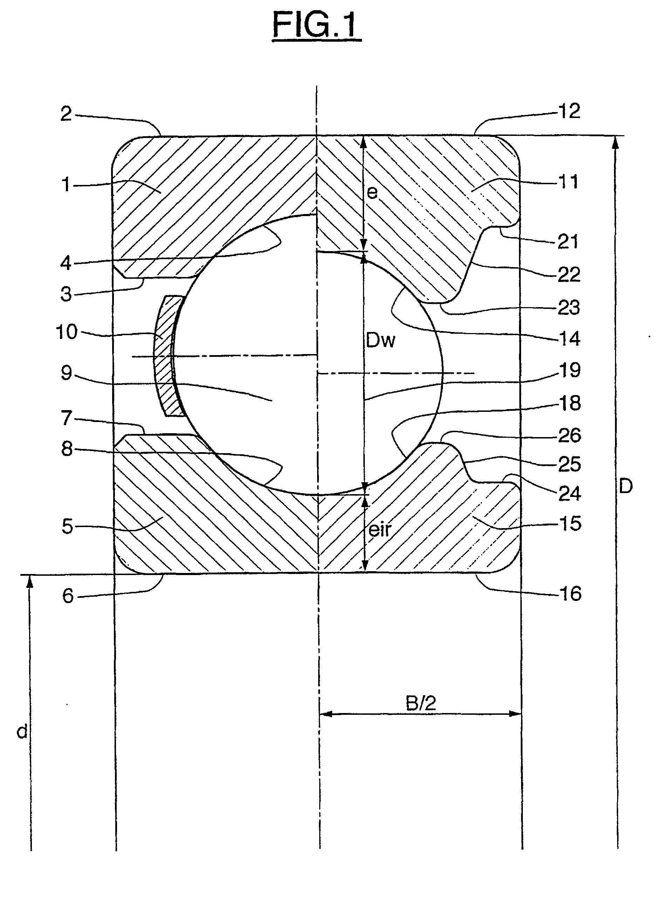

la figure 1 est une vue en coupe axiale d'un roulement, la demi-coupe de gauche étant celle d'un roulement conventionnel et la demi-coupe de droite étant celle d'un roulement suivant l'invention;

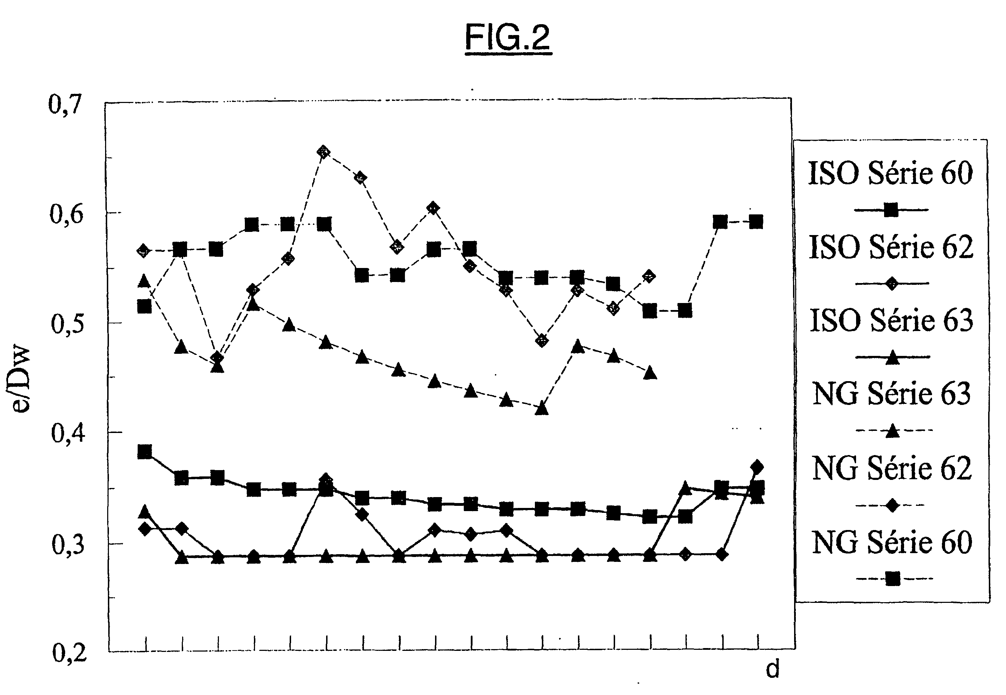

la figure 2 est un graphique sur lequel figurent en ordonnée les valeurs du rapport entre l'épaisseur de la bague extérieure prise entre le fond du chemin de roulement et le diamètre extérieur de la bague extérieure, et le diamètre des billes établi dans chaque série de roulement pour un certain nombre de références conventionnelles de la série ISO et de références conformes à l'invention, par alésages de roulement croissants, chaque point de l'abscisse correspondant à une valeur d'alésage d normalisée figurant dans la gamme des roulements ISO;

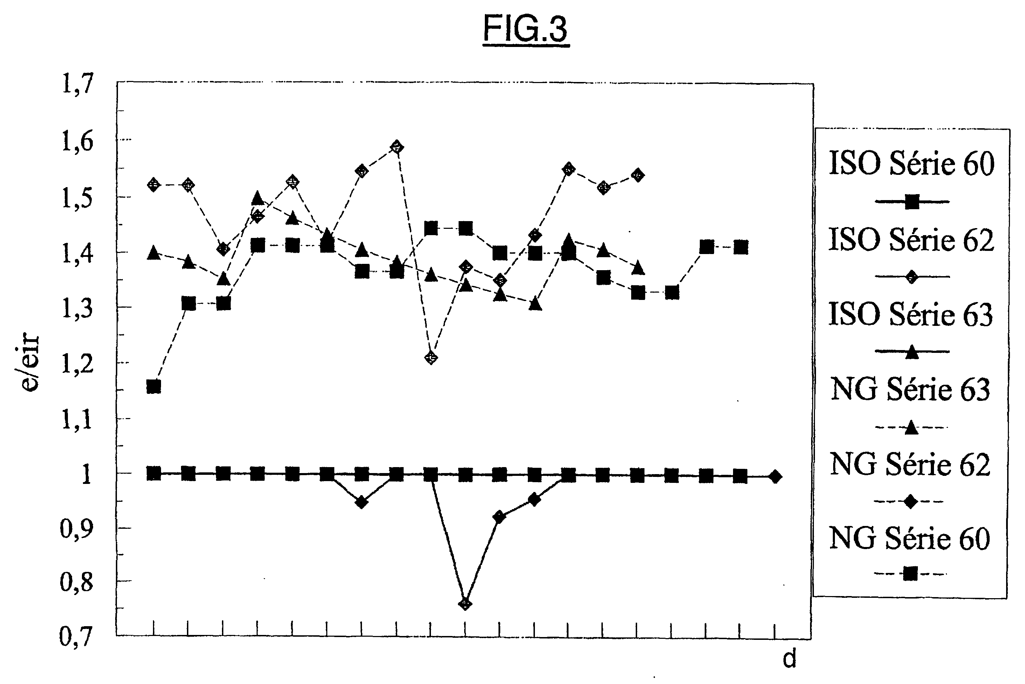

la figure 3 est un graphique similaire à celui de la figure 2, y figurent en ordonnée les valeurs du rapport entre l'épaisseur de la bague extérieure prise entre le fond du chemin de roulement et le diamètre extérieur de la bague extérieure, et l'épaisseur de la bague intérieure prise entre le fond du chemin de roulement et l'alésage de la bague intérieure, par alésages croissants;

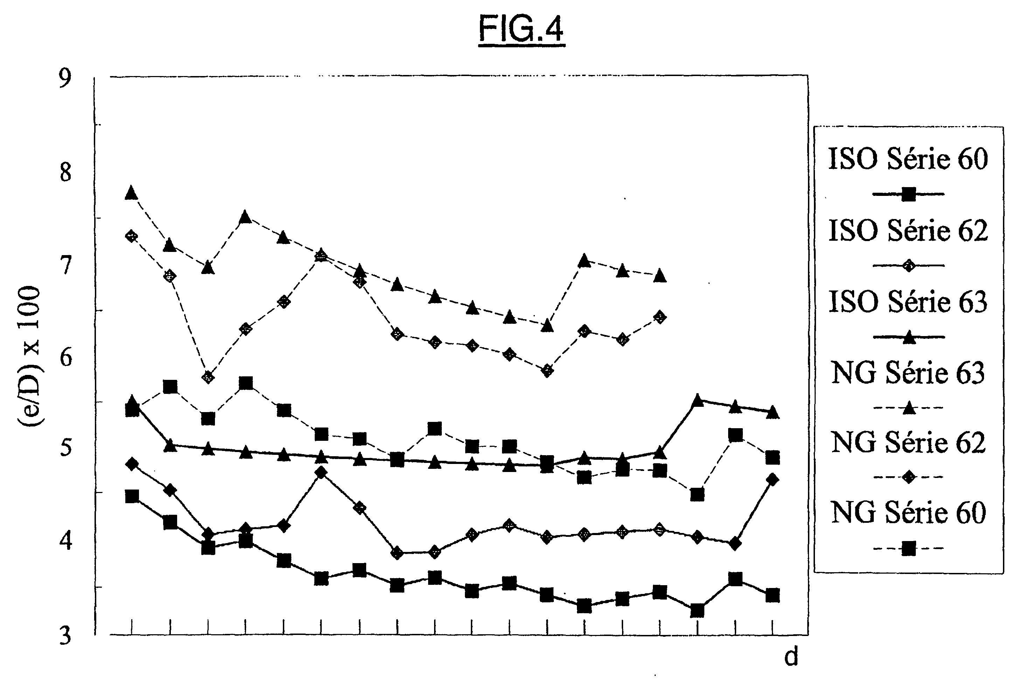

la figure 4 est un graphique similaire à celui de la figure 2, y figurent en ordonnée les valeurs du rapport entre l'épaisseur de la bague extérieure prise entre le fond du chemin de roulement et le diamètre extérieur de la bague extérieure, et le diamètre extérieur du roulement, par alésages de roulement croissants;

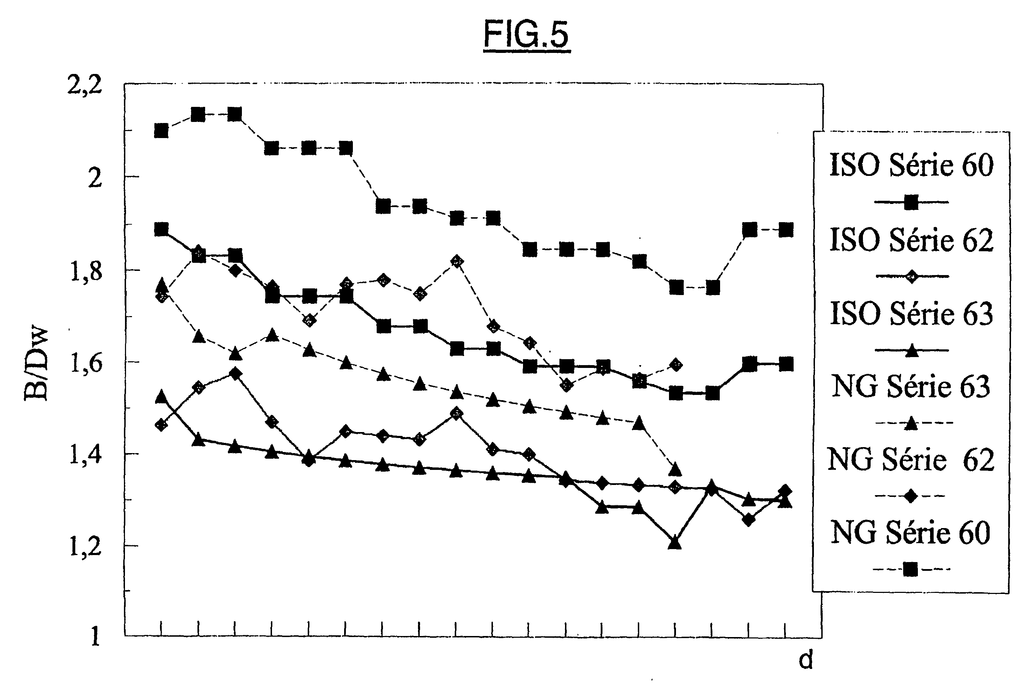

la figure 5 est un graphique similaire à celui de la figure 2, y figurent en ordonnée les valeurs du rapport entre la largeur des bagues et le diamètre des billes, par alésages croissants; et

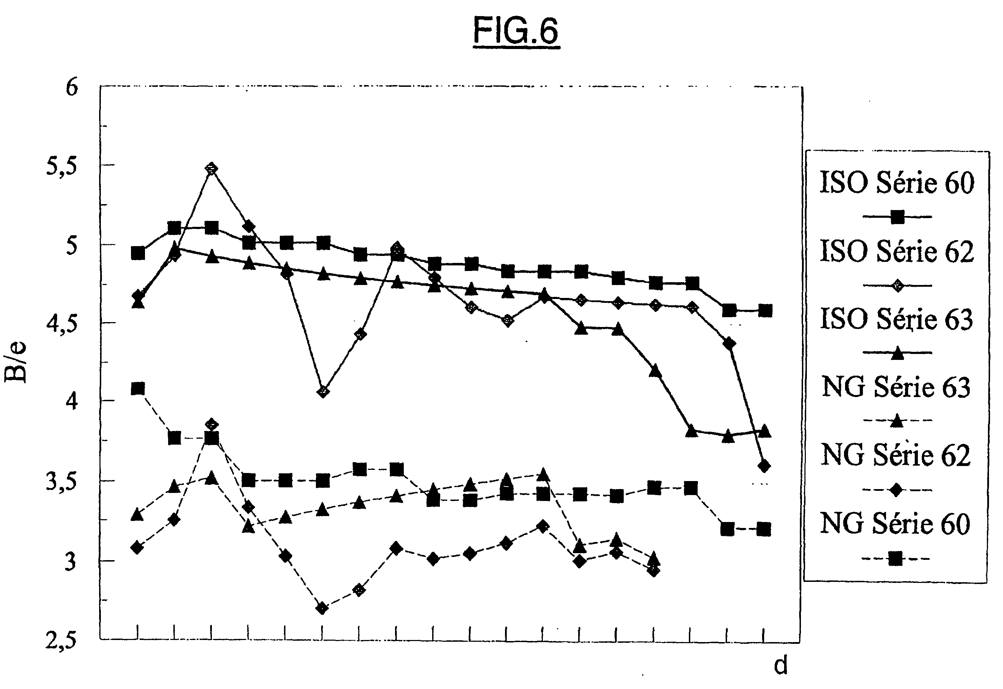

la figure 6 est un graphique similaire à celui de la figure 2, y figurent en ordonnée les valeurs du rapport entre la largeur des bagues et l'épaisseur de la bague extérieure prise entre le fond du chemin de roulement et le diamètre extérieur de la bague extérieure, par alésages croissants.

Comme on peut le voir sur la figure 1, un roulement conventionnel rigide à une rangée de billes (moitié gauche sur la figure) comprend une bague extérieure 1 pourvue d'une surface extérieure cylindrique 2 et d'un alésage 3 sur lequel est formé un chemin de roulement toroïdal 4, une bague intérieure 5 pourvue d'un alésage 6 et d'une surface extérieure cylindrique 7 sur laquelle est formé un chemin de roulement toroïdal 8, une rangée de billes 9 disposées entre les chemins de roulement 4 et 8, et une cage 10 de maintien de l'espacement circonférentiel régulier des billes 9.

La cage 10 est réalisée en tôle d'acier. On voit que l'épaisseur radiale de la bague extérieure 1 et celle de la bague intérieure 5 sont sensiblement égales. On entend par épaisseur radiale la distance séparant le fond du chemin de roulement de l'une des bagues prise dans le plan radial passant par le centre des billes et la surface cylindrique de la même bague, cette surface cylindrique étant extérieure ou intérieure selon que la bague est elle-même respectivement extérieure ou intérieure.

Sur la moitié droite de la figure où est montré un roulement rigide à une rangée de billes conforme à l'invention, les références des éléments semblables à ceux de la partie gauche ont été augmentées du nombre 10. On voit que les billes 19 sont de diamètre réduit par rapport aux billes 9 du roulement conventionnel, cette réduction étant effectuée en conservant l'épaisseur radiale de la bague intérieure 15, mais en augmentant l'épaisseur de la bague extérieure 11.

Cette diminution du diamètre des billes a également pour effet de diminuer l'espace qu'elles occupent dans le sens axial et par conséquent d'augmenter l'espace axial disponible pour un organe d'étanchéité et/ou pour du lubrifiant. A cet effet, on prévoit sur la bague extérieure 11 une portion cylindrique 21 adjacente à la face latérale de ladite bague extérieure 11 et de diamètre supérieur au diamètre maximum du chemin de roulement 14. Le raccord entre la portion cylindrique 21 et le chemin de roulement 14 s'effectue grâce à une portion oblique 22 orientée, à partir de la portion cylindrique 21, radialement vers l'intérieur et axialement en direction des billes 19, puis par une portion arrondie 23. Un joint d'étanchéité ou un flasque peut être solidement emmanché sur la portion cylindrique 21 avec, si nécessaire, une lèvre souple statique venant en contact avec la portion oblique 22.

De façon similaire, on prévoit sur la bague intérieure 15 une portion cylindrique 24 de diamètre plus faible que celui de la surface cylindrique extérieure 7 de la bague intérieure 5 d'un roulement conventionnel. La portion cylindrique 24 se raccorde au chemin de roulement 18 par une portion oblique 25 dirigée radialement vers l'extérieur et axialement vers les billes 19, puis par une portion arrondie 26.

On peut ainsi prévoir un joint d'étanchéité monté sur la bague extérieure 11 et possédant une lèvre venant en contact avec la portée cylindrique 24 et une lèvre supplémentaire venant en contact avec la portion oblique 25. On peut ainsi disposer une étanchéité haute protection.

De plus, le fait que la portion cylindrique 24 soit de diamètre plus faible que la surface cylindrique extérieure 7 permet de réduire la vitesse linéaire relative entre la lèvre de frottement d'un joint d'étanchéité et ladite portion cylindrique 24, d'où une réduction de l'usure de la lèvre d'étanchéité et une réduction de la consommation d'énergie et donc de l'échauffement.

Le fait que la portion cylindrique 21 de la bague extérieure 11 soit de diamètre plus élevé que celui de l'alésage 3 de la bague extérieure 1 conventionnelle, permet un ancrage plus efficace dans le sens circonférentiel du joint d'étanchéité avec une diminution du risque de rotation accidentelle du joint par rapport à la bague extérieure 11 dû au couple de frottement, grâce à un emmanchement sur une surface de plus fort diamètre.

On pourrait bien sûr, sans sortir du cadre de l'invention, utiliser d'autres profils pour les surfaces 21 et/ou 24 en vue de réaliser des ancrages et/ou des portions de joints plus sophistiquées.

Sur la figure 1, sont également montrées les différentes cotes d'un roulement. On voit que les cotes extérieures sont conservées quand on passe d'un roulement conventionnel à un roulement selon l'invention. Le diamètre extérieur D de la bague extérieure 2 est égal à celui de la bague extérieure 12. Il en est de même des alésages d 6 et 16 des bagues intérieures 5 et 15 et de la largeur B prise entre les faces latérales radiales des bagues. Par contre, on voit que l'on a modifié le diamètre des billes D_{w} et l'épaisseur e de la bague extérieure 11.

Sur la figure 1, on voit que l'épaisseur eᵢᵣ en fond de gorge de la bague intérieure 15 est conservée. Toutefois, à titre de variante, on pourrait prévoir d'augmenter ou de diminuer légèrement cette épaisseur eᵢᵣ pour des applications où l'augmentation de la rigidité ou de la flexibilité de la bague intérieure 15 présenterait des avantages.

Sur les figures 2 à 6, on a étudié, pour des valeurs d'alésage déterminées choisies dans la gamme standard ISO, les valeurs correspondantes de certains paramètres pour les roulements nouvelle génération suivant l'invention ainsi que pour les roulements conventionnels de la série ISO.

Ainsi, sur la figure 2, on a représenté les variations du paramètre e/D_{w} pour différentes valeurs d'alésages normalisées.

Par exemple, le premier point de l'abscisse correspond à une valeur d'alésage de roulement de 40 mm.

A cette valeur, correspondent en ordonnées les valeurs de e/D_{w} pour les roulements conventionnels d'alésage 40 mm de la série ISO 60 (6008), de la série 62 (6208) et de la série 63 (6308), ainsi que les valeurs e/D_{w} pour les roulements correspondants de la nouvelle génération d'alésage 40 mm.

Les courbes correspondant aux séries de roulements conventionnels de la gamme ISO sont repérées dans la légende par ISO séries 60, 62, 63.

Les courbes correspondant aux séries correspondantes de roulements de la nouvelle génération sont repérées dans la légende par NG séries 60, 62, 63.

On voit que le paramètre e/D_{w} est toujours supérieur à 0,4 pour les roulements conformes à l'invention en étant, selon les séries, compris entre 0,5 et 0,6, entre 0,4 et 0,7 ou encore entre 0,4 et 0,55, avec toujours un écart d'au moins 0,13 par rapport au roulement correspondant à la même série mais de type conventionnel.

Sur la figure 3, on voit que le paramètre e/eᵢᵣ est toujours compris entre 1,1 et 1,6 pour les roulements conformes à l'invention. Selon les séries, ce paramètre est compris entre 1,1 et 1,5, entre 1,2 et 1,6, ou encore entre 1,3 et 1,5 avec un écart minimum d'au moins 0,15 par rapport au roulement conventionnel de la même série.

Sur la figure 4, on voit que le paramètre e/D est compris, pour les roulements conformes à l'invention, entre 0,045 et 0,08. Selon les séries, il est compris entre 0,045 et 0,06, entre 0,055 et 0,075 ou encore entre 0,065 et 0,08. L'écart minimum avec un roulement correspondant de la même série conventionnelle est au minimum de 0,01.

Sur la figure 5, on voit que le paramètre B/D_{w}, pour un roulement conforme à l'invention, est compris entre 1,3 et 2,2. Selon les séries, ce paramètre est compris entre 1,7 et 2,2, entre 1,5 et 1,9, ou encore entre 1,3 et 1,8, avec un écart par rapport au roulement correspondant de la même série mais de type conventionnel, d'au minimum 0,135.

Sur la figure 6, on voit que la valeur du paramètre B/e pour un roulement conforme à l'invention est compris entre 2,5 et 4,2. Selon les séries, ce paramètre est compris entre 3 et 4,2, entre 2,5 et 4 ou encore entre 3 et 3,6, avec un écart minimum par rapport à un roulement correspondant de même série mais de type conventionnel de 0,85.

## Revendications

1. Dispositif de palier à roulement rigide à une rangée de billes, comprenant une bague extérieure (11) pourvue d'une surface extérieure et d'un alésage sur lequel est formé un chemin de roulement intérieur toroïdal (14), une bague intérieure (15) pourvue d'un alésage et d'une surface extérieure cylindrique sur laquelle est formée un chemin de roulement extérieur toroïdal (18), une rangée de billes (19) disposée entre les deux chemins de roulement, et une cage apte à maintenir un espacement circonférentiel régulier entre les billes, **caractérisé par le fait que** le rapport entre l'épaisseur radiale de la bague extérieure prise entre le fond du chemin de roulement intérieur et la surface extérieure de la bague extérieure, et le diamètre des billes est compris entre 0,4 et 0,7, et que le rapport entre l'épaisseur radiale de la bague extérieure prise entre le fond du chemin de roulement intérieur et la surface extérieure de la bague extérieure, et l'épaisseur radiale de la bague intérieure prise entre le fond du chemin de roulement extérieur et l'alésage de la bague intérieure est compris entre 1,1 et 1,6.

2. Palier à roulement selon la revendication 1, **caractérisé par le fait que** le rapport entre l'épaisseur radiale de la bague extérieure prise entre le fond du chemin de roulement intérieur et la surface extérieure de la bague extérieure, et le diamètre extérieur du roulement est compris entre 0,045 et 0,08.

3. Palier à roulement selon la revendication 1 ou 2, **caractérisé par le fait que** le rapport entre la largeur des bagues et le diamètre des billes est compris entre 1,3 et 2,2.

4. Palier à roulement selon l'une quelconque des revendications précédentes, **caractérisé par le fait que** le rapport entre la largeur des bagues et l'épaisseur radiale de la bague extérieure prise entre le fond du chemin de roulement intérieur et la surface extérieure de la bague extérieure est compris entre 2,5 et 4,2.

5. Palier à roulement selon l'une quelconque des revendications précédentes, **caractérisé par le fait que** le rapport entre l'épaisseur radiale de la bague extérieure prise entre le fond du chemin de roulement intérieur et la surface extérieure de la bague extérieure, et le diamètre des billes est compris entre 0,5 et 0,6, que le rapport entre l'épaisseur radiale de la bague extérieure prise entre le fond du chemin de roulement intérieur et la surface extérieure de la bague extérieure, et l'épaisseur radiale de la bague intérieure prise entre le fond du chemin de roulement extérieur et l'alésage de la bague intérieure est compris entre 1,1 et 1,5, que le rapport entre l'épaisseur radiale de la bague extérieure prise entre le fond du chemin de roulement intérieur et la surface extérieure de la bague extérieure, et le diamètre extérieur du roulement est compris entre 0,045 et 0,06, que le rapport entre la largeur des bagues et le diamètre des billes est compris entre 1,7 et 2,2, et que le rapport entre la largeur des bagues et l'épaisseur radiale de la bague extérieure prise entre le fond du chemin de roulement intérieur et la surface extérieure de la bague extérieure est compris entre 3 et 4.2.

6. Palier à roulement selon l'une quelconque des revendications 1 à 4, **caractérisé par le fait que** le rapport entre l'épaisseur radiale de la bague extérieure prise entre le fond du chemin de roulement intérieur et la surface extérieure de la bague extérieure, et le diamètre des billes est compris entre 0,4 et 0,7, que le rapport entre l'épaisseur radiale de la bague extérieure prise entre le fond du chemin de roulement intérieur et la surface extérieure de la bague extérieure, et l'épaisseur radiale de la bague intérieure prise entre le fond du chemin de roulement extérieur et l'alésage de la bague intérieure est compris entre 1,2 et 1,6, que le rapport entre l'épaisseur radiale de la bague extérieure prise entre le fond du chemin de roulement intérieur et la surface extérieure de la bague extérieure, et le diamètre extérieur du roulement est compris entre 0,055 et 0,075, que le rapport entre la largeur des bagues et le diamètre des billes est compris entre 1,5 et 1,9, et que le rapport entre la largeur des bagues et l'épaisseur radiale de la bague extérieure prise entre le fond du chemin de roulement intérieur et la surface extérieure de la bague extérieure est compris entre 2,5 et 4.

7. Palier à roulement selon l'une quelconque des revendications 1 à 4, **caractérisé par le fait que** le rapport entre l'épaisseur radiale de la bague extérieure prise entre le fond du chemin de roulement intérieur et la surface extérieure de la bague extérieure, et le diamètre des billes est compris entre 0,4 et 0,55, que le rapport entre l'épaisseur radiale de la bague extérieure prise entre le fond du chemin de roulement intérieur et la surface extérieure de la bague extérieure, et l'épaisseur radiale de la bague intérieure prise entre le fond du chemin de roulement extérieur et l'alésage de la bague intérieure est compris entre 1,3 et 1,5, que le rapport entre l'épaisseur radiale de la bague extérieure prise entre le fond du chemin de roulement intérieur et la surface extérieure de la bague extérieure, et le diamètre extérieur du roulement est compris entre 0,065 et 0,08, que le rapport entre la largeur des bagues et le diamètre des billes est compris entre 1,3 et 1,8, et que le rapport entre la largeur des bagues et l'épaisseur radiale de la bague extérieure prise entre le fond du chemin de roulement intérieur et la surface extérieure de la bague extérieure est compris entre 3 et 3,6.

8. Palier à roulement selon l'une quelconque des revendications précédentes, **caractérisé par le fait que** les valeurs de diamètre extérieur du roulement, de l'alésage du roulement, et de largeur du roulement sont identiques à celles d'un roulement rigide à une rangée de billes conventionnel de la gamme normalisée ISO.

## Patentansprüche

1. Starre Wälzlageranordnung mit einer Reihe von Kugeln, zu der gehören: ein Außenring (11), der eine Außenfläche und eine zylindrische Bohrung aufweist, in der eine ringförmige innere Lauffläche (14) ausgebildet ist, ein Innenring (15), der mit einer Bohrung und einer zylindrischen Außenfläche versehen ist, auf der eine ringförmige äußere Lauffläche (18) ausgebildet ist, eine Reihe von zwischen den zwei Laufflächen des Wälzlagers angeordneten Kugeln (19) und ein Käfig, der dazu geeignet ist, die Kugeln um den Umfang herum gleichmäßig beabstandet zu halten, **dadurch gekennzeichnet, dass** das Verhältnis zwischen der radialen Dicke des Außenrings, gemessen zwischen dem Boden der inneren Lauffläche und der Außenumfangsfläche des Außenrings, und dem Durchmesser der Kugeln zwischen 0,4 und 0,7 beträgt und **dass** das Verhältnis zwischen der radialen Dicke des Außenrings, gemessen zwischen dem Boden der inneren Lauffläche und der Außenumfangsfläche des Außenrings, und der radialen Dicke des Innenrings, gemessen zwischen dem Boden der äußeren Lauffläche und der Bohrung des Innenrings, zwischen 1,1 und 1,6 beträgt.

2. Wälzlager nach Anspruch 1, **dadurch gekennzeichnet, dass** das Verhältnis zwischen der radialen Dicke des Außenrings, gemessen zwischen dem Boden der inneren Lauffläche und der Außenumfangsfläche des Außenrings, und dem Außendurchmesser des Wälzlagers zwischen 0,045 und 0,08 beträgt.

3. Wälzlager nach Anspruch 1 oder 2, **dadurch gekennzeichnet, dass** das Verhältnis zwischen der Breite der Ringe und dem Durchmesser der Kugeln zwischen 1,3 und 2,2 beträgt.

4. Wälzlager nach einem der vorhergehenden Ansprüche, **dadurch gekennzeichnet, dass** das Verhältnis zwischen der Breite der Ringe und der radialen Dicke des Außenrings, gemessen zwischen dem Boden der inneren Lauffläche und der Außenumfangsfläche des Außenrings, zwischen 2,5 und 4,2 beträgt.

5. Wälzlager nach einem der vorhergehenden Ansprüche, **dadurch gekennzeichnet, dass** das Verhältnis zwischen der radialen Dicke des Außenrings, gemessen zwischen dem Boden der inneren Lauffläche und der Außenumfangsfläche des Außenrings, und dem Durchmesser der Kugeln zwischen 0,5 und 0,6 beträgt, **dass** das Verhältnis zwischen der radialen Dicke des Außenrings, gemessen zwischen dem Boden der inneren Lauffläche und der Außenumfangsfläche des Außenrings, und der radialen Dicke des Innenrings, gemessen zwischen dem Boden der äußeren Lauffläche und der Bohrung des Innenrings, zwischen 1,1 und 1,5 beträgt, **dass** das Verhältnis zwischen der radialen Dicke des Außenrings, gemessen zwischen dem Boden der inneren Lauffläche und der Außenumfangsfläche des Außenrings, und dem Außendurchmesser des Wälzlagers zwischen 0,045 und 0,06 beträgt, dass das Verhältnis zwischen der Breite der Ringe und dem Durchmesser der Kugeln zwischen 1,7 und 2,2 beträgt, und **dass** das Verhältnis zwischen der Breite der Ringe und der radialen Dicke des Außenrings, gemessen zwischen dem Boden der inneren Lauffläche und der Außenumfangsfläche des Außenrings, zwischen 3 und 4,2 beträgt.

6. Wälzlager nach einem der Ansprüche 1 bis 4, **dadurch gekennzeichnet, dass** das Verhältnis zwischen der radialen Dicke des Außenrings, gemessen zwischen dem Boden der inneren Lauffläche und der Außenumfangsfläche des Außenrings, und dem Durchmesser der Kugeln zwischen 0,4 und 0,7 beträgt, **dass** das Verhältnis zwischen der radialen Dicke des Außenrings, gemessen zwischen dem Boden der inneren Lauffläche und der Außenumfangsfläche des Außenrings, und der radialen Dicke des Innenrings, gemessen zwischen dem Boden der äußeren Lauffläche und der Bohrung des Innenrings, zwischen 1,2 und 1,6 beträgt, **dass** das Verhältnis zwischen der radialen Dicke des Außenrings, gemessen zwischen dem Boden der inneren Lauffläche und der Außenumfangsfläche des Außenrings, und dem Außendurchmesser des Wälzlagers zwischen 0,055 und 0,075 beträgt, **dass** das Verhältnis zwischen der Breite der Ringe und dem Durchmesser der Kugeln zwischen 1,5 und 1,9 beträgt und dass das Verhältnis zwischen der Breite der Ringe und der radialen Dicke des Außenrings, gemessen zwischen dem Boden der inneren Lauffläche und der Außenumfangsfläche des Außenrings, zwischen 2,5 und 4 beträgt.

7. Wälzlager nach einem der Ansprüche 1 bis 4, **dadurch gekennzeichnet, dass** das Verhältnis zwischen der radialen Dicke des Außenrings, gemessen zwischen dem Boden der inneren Lauffläche und der Außenumfangsfläche des Außenrings, und dem Durchmesser der Kugeln zwischen 0,4 und 0,55 beträgt, dass das Verhältnis zwischen der radialen Dicke des Außenrings, gemessen zwischen dem Boden der inneren Lauffläche und der Außenumfangsfläche des Außenrings, und der radialen Dicke des Innenrings, gemessen zwischen dem Boden der äußeren Lauffläche und der Bohrung des Innenrings, zwischen 1,3 und 1,5 beträgt, dass das Verhältnis zwischen der radialen Dicke des Außenrings, gemessen zwischen dem Boden der inneren Lauffläche und der Außenumfangsfläche des Außenrings, und dem Außendurchmesser des Wälzlagers zwischen 0,065 und 0,08 beträgt, **dass** das Verhältnis zwischen der Breite der Ringe und dem Durchmesser der Kugeln zwischen 1,3 und 1,8 beträgt und **dass** das Verhältnis zwischen der Breite der Ringe und der radialen Dicke des Außenrings, gemessen zwischen dem Boden der inneren Lauffläche und der Außenumfangsfläche des Außenrings, zwischen 3 und 3,6 beträgt.

8. Wälzlager nach einem der vorhergehenden Ansprüche, **dadurch gekennzeichnet, dass** die Werte des Außendurchmessers des Wälzlagers, der Bohrung des Wälzlagers und der Breite des' Wälzlagers identisch sind mit den Werten eines der ISO-Norm entsprechenden herkömmlichen starren Wälzlagers mit einer Reihe von Kugeln.

## Claims

1. A single row rigid ball bearing device comprising an outer ring (11) equipped with an outer surface and with a bore on which a toroidal inner raceway (14) is formed, an inner ring (15) equipped with a bore and with a cylindrical outer surface on which a toroidal outer raceway (18) is formed, a row of balls (19) arranged between the two raceways, and a cage capable of keeping a uniform circumferential spacing between the balls, **characterized in that** the ratio between the radial thickness of the outer ring taken between the bottom of the inner raceway and the outer surface of the outer ring, and the diameter of the balls is between 0.4 and 0.7, and **in that** the ratio between the radial thickness of the outer ring taken between the bottom of the inner raceway and the outer surface of the outer ring, and the radial thickness of the inner ring taken between the bottom of the outer raceway and the bore of the inner ring is between 1.1 and 1.6.

2. The ball bearing as claimed in claim 1,
**characterized in that** the ratio between the radial thickness of the outer ring taken between the bottom of the inner raceway and the outer surface of the outer ring, and the outside diameter of the bearing is between 0.045 and 0.08.

3. The ball bearing as claimed in claim 1 or 2, **characterized in that** the ratio between the width of the rings and the diameter of the balls is between 1.3 and 2.2.

4. The ball bearing as claimed in any of the preceding claims, **characterized in that** the ratio between the width of the rings and the radial thickness of the outer ring taken between the bottom of the inner raceway and the outer surface of the outer ring is between 2.5 and 4.2.

5. The ball bearing as claimed in any of the preceding claims, **characterized in that** the ratio between the radial thickness of the outer ring taken between the bottom of the inner raceway and the outer surface of the outer ring, and the diameter of the balls is between 0.5 and 0.6 and that the ratio between the radial thickness of the outer ring taken between the bottom of the inner raceway and the outer surface of the outer ring, and the radial thickness of the inner ring taken between the bottom of the outer raceway and the bore of the inner ring is between 1.1 and 1.5, **in that** the ratio between the radial thickness of the outer ring taken between the bottom of the inner raceway and the outer surface of the outer ring, and the outside diameter of the bearing is between 0.045 and 0.06, **in that** the ratio between the width of the rings and the diameter of the balls is between 1.7 and 2.2, and **in that** the ratio between the width of the rings and the radial thickness of the outer ring taken between the bottom of the inner raceway and the outer surface of the outer ring is between 3 and 4.2.

6. The ball bearing as claimed in any of claims 1 to 4, **characterized in that** the ratio between the radial thickness of the outer ring taken between the bottom of the inner raceway and the outer surface of the outer ring, and the diameter of the balls is between 0.4 and 0.7 and **in that** the ratio between the radial thickness of the outer ring taken between the bottom of the inner raceway and the outer surface of the outer ring, and the radial thickness of the inner ring taken between the bottom of the outer raceway and the bore of the inner ring is between 1.2 and 1.6, **in that** the ratio between the radial thickness of the outer ring taken between the bottom of the inner raceway and the outer surface of the outer ring, and the outside diameter of the bearing is between 0.055 and 0.75, **in that** the ratio between the width of the rings and the diameter of the balls is between 1.5 and 1.9, and **in that** the ratio between the width of the rings and the radial thickness of the outer ring taken between the bottom of the inner raceway and the outer surface of the outer ring is between 2.5 and 4.

7. The ball bearing as claimed in any of claims 1 to 4, **characterized in that** the ratio between the radial thickness of the outer ring taken between the bottom of the inner raceway and the outer surface of the outer ring, and the diameter of the balls is between 0.4 and 0.55, **in that** the ratio between the radial thickness of the outer ring taken between the bottom of the inner raceway and the outer surface of the outer ring, and the radial thickness of the inner ring taken between the bottom of the outer raceway and the bore of the inner ring is between 1.3 and 1.5, **in that** the ratio between the radial thickness of the outer ring taken between the bottom of the inner raceway and the outer surface of the outer ring, and the outside diameter of the bearing is between 0.065 and. 0.08, **in that** the ratio between the width of the rings and the diameter of the balls is between 1.3 and 1.8, and **in that** the ratio between the width of the rings and the radial thickness of the outer ring taken between the bottom of the inner raceway and the outer surface of the outer ring is between 3 and 3.6.

8. The ball bearing as claimed in any of the preceding claims, **characterized in that** the values of the outside diameter of 'the bearing, of the bore of the bearing, and of the width of the bearing are identical to those of a conventional single row rigid ball bearing of the standardized ISO range.
